Europäisches Patentamt

(19) European Patent Office

Office européen des brevets

(11) Publication number: **0 055 567**

**A1**

(12) **EUROPEAN PATENT APPLICATION**

(21) Application number: **81305974.8**

(22) Date of filing: **21.12.81**

(51) Int. Cl.³: **F 16 J 15/20**

(30) Priority: **29.12.80 GB 8041324**

(43) Date of publication of application:
**07.07.82 Bulletin 82/27**

(84) Designated Contracting States:
**BE DE FR GB IT NL SE**

(71) Applicant: **SIBEX (CONSTRUCTIONS) LIMITED**
**20 St. Mary's Parsonage**
**Manchester M3 2NL(GB)**

(72) Inventor: **Summerell, Michael**
**1 Sherbourne Close**
**Highlight Park Barry Glamorgan(GB)**

(74) Representative: **Crux, John Anthony et al,**
**20 St. Mary's Parsonage**
**Manchester M3 2NL(GB)**

(54) **Improvements in and relating to the installation of packing materials.**

㊗ A gland chamber on a rotable and/or axially slidable shaft is re-packed with braided, woven or knitted textile packing material by injecting the material into the chamber through an aperture formed in a wall of the chamber.

EP 0 055 567 A1

- 1 -

## Improvements in and relating to the installation of packing materials

This invention relates to a method of introducing packing material into a sealing gland on a shaft which may be rotable and/or axially slidable relative to the gland. Such glands are found in pumps and valves for example and usually comprise an annular gland chamber surrounding the shaft, together with a gland nut or follower, which is itself a clearance fit on the shaft. The gland nut (or follower) is movable axially of the shaft to apply progressively greater pressure to a textile packing material wrapped around the shaft, inside the gland chamber.

The textile packing material is usually based on a textile fabric, often heavily impregnated with sealant/lubricant materials such as graphite, grease and/or fluorocarbon polymer. Braids are commonly used as textile packings for glands. When the gland starts to leak, the nut or follower is tightened down to stop the leak. Eventually, further tightening has little or no effect and the gland must be re-packed by removing the gland nut or follower, so as to get access to the chamber. After clearing out the old packing, new packing is wrapped around the shaft and pushed axially of the shaft into the chamber to re-fill it. The gland nut or follower is replaced and tightened sufficiently to effect a seal.

Whilst the foregoing is a relatively simple procedure when the leaking fluid can be stopped at source for the duration of the re-packing operation, serious problems may arise when stopping the fluid at source also requires a temporary cessation of production.

In many instances, such a cessation is commercially unacceptable, except at planned maintenance periods. Problems also arise when the fluid is corrosive or potentially explosive, because unless stopped at source, large volumes of it will escape when the gland nut or follower is released, thereby creating a considerable hazard.

The traditional solution to this sort of problem has been to immobilise the shaft by drilling into the gland chamber and injecting a self-curing sealant composition which sets in situ. If successful, this stops the leak, but it also prevents any further rotation of the shaft, since the sealant must stick to the shaft to be really effective. Apart from immobilising the shaft, which is in itself not always acceptable, the eventual re-packing operation when the plant can be safely shut down is not very easy, because the cured sealant has to be bored or broken out of the chamber.

Another solution to the problem has been to inject a fibrous composition as a substitute/replacement for the original textile packing. However, such compositions lack the integrity needed to give a really satisfactory seal, whilst allowing normal movement or operation of the shaft.

According to the present invention, a method of re-packing a gland chamber comprises the step of injecting a length of a textile packing material into the chamber through an aperture formed in a wall thereof. The textile packing may be a braided, woven or knitted textile; braids have proved particularly satisfactory. The method may also include the step of forming, e.g. drilling, the aperture in the chamber, where no such aperture yet exists, but if the method has been used to treat the same gland on a previous occasion, the necessary aperture will already be present, albeit with a blanking plug or set screw in it to prevent leakage.

Preferably, the aperture is aligned generally tangentially of a shaft passing through the gland, so that the injected material will tend to encircle the shaft. Preferably, the aperture is also slightly inclined with respect to a plane normal to the shaft, so that the injected material will tend to encircle around the shaft in a spiral. The method may therefore include the step of drilling the aperture so as to exhibit the two desired characteristics just mentioned.

It has been found that a textile packing material and in particular, a braid, can be very satisfactorily injected through quite a small aperture (say half of its as-supplied diameter) if it is first loaded into a tube in which it is relatively tightly confined. One end of the tube should be (or should have an adaptor) engageable with the hole through which injection is to be made. The other end should be provided with means for forcing the textile packing lengthwise from the tube through the hole. In practice a piston which is a sliding fit in the tube has proved suitable. Such a piston could perhaps be operated manually in some circumstances, but more typically, a fairly high pressure will be needed.

For this, a modified grease gun tool has proved suitable. A conventional grease gun can be used as a source of hydraulic pressure for a piston in a barrel, the piston being connected to a rod which itself constitutes the piston for the tube containing the textile packing.

It will be appreciated that drilling into the gland chamber may be hazardous, if the chamber contains fluid under pressure. Accordingly, it is particularly preferred that a blind aperture is drilled and then tapped, without breaking into the gland chamber. A adaptor including a valve is screwed into the blind aperture and the final drilling step is carried out through the adaptor. As soon as a clean aperture into the chamber has been made, the drill is withdrawn and the adaptor valve is shut to prevent further fluid blow-off. The apparatus for injecting the textile packing can then be screwed into the adaptor and put under pressure before opening the adaptor valve. Injection of the textile packing follows as described earlier.

Contrary to expectations, such severe treatment applied to a textile packing does not destroy its integrity. Even though injected through a relatively small aperture, the material is not torn apart. In fact, it tends to return to its original state.

Obviously, in order to inject textile packing material into a gland chamber, the gland nut or follower must be partially released to create a space for the new packing material. However, the almost inevitable resultant leakage will normally be very much less than if the nut or follower were to be completely released or removed. Using the angled, tangential aperture described earlier, it is observed that a gland chamber can often be

- 5 -

0055567

substantially completely re-packed without actually removing the gland nut or follower. Successive lengths of textile packing will spiral around the shaft in the chamber and take up the position of a conventionally - fitted packing. After injecting enough new textile packing material the gland nut or follower can be re-tightened in the usual way.

Because the method of the invention can be carried out "live" without completely dismantling the gland assembly and without interrupting the process involved, (in many cases, at least), the method may be carried out as an adjunct to routine on-line maintenance, instead of during periodic shut-downs. This is especially useful, because it enables shut-down maintenance to concentrate on major plant overhaul rather than on minor leakage problems.

CLAIMS

1. A method of re-packing a gland chamber on a rotable or axially slidable shaft, characterised by the step of injecting a length of a textile packing material into the gland chamber through an aperture formed in a wall thereof.

2. The method of claim 1 characterised in that the textile packing material is a braided, woven or knitted textile.

3. The method of claim 1 or claim 2 further characterised by the preliminary step of forming the aperture in the wall of the gland chamber.

4. The method of claim 3 characterised in that a blind aperture is drilled and screw threaded to receive an adaptor provided with a valve which is screwed into the blind aperture prior to extending the aperture into the gland chamber.

5. The method of claim 3 characterised in that the aperture is formed so as to be generally tangential to the shaft passing through said gland chamber.

6. The method of claim 3 characterised in that the aperture is formed so as to be inclined with respect to a plane normal to the axis of the shaft.

7. The method of any preceding claim characterised in that the textile packing material is loaded into a tube, one end of which is adapted to be engageable with the aperture or with the adaptor screwed into the aperture and injection is accomplished by forcing the packing lengthwise from the tube through the aperture or adaptor.

8.  The method of claim 7 characterised in that the
    textile packing is forced from the tube by a
    hydraulically - operated piston.

9.  The method of any preceding claim characterised in
    that a gland nut or follower is partially released
    prior to, or during injection, or between successive
    injection steps so as to create a space for the new
    textile packing material.

European Patent Office

**EUROPEAN SEARCH REPORT**

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | F 16 J  15/20 |
| X | DE - C - 389 119 (W. VIJGEBOOM) <br> * claim 1; page 1, line 60 to page 2, line 7; fig. 1, 2 * | 1-3,5 | |
| X | US - A - 1 953 493 (J.F. McKEE) <br> * claims 11, 12, 18; page 4, lines 40 to 45; fig. 3 to 5 * | 1,3-5, 7,8 | |
| A | DD - A - 90 029 (VEB MAGDEBURGER ARMATURENWERKE "KÀRL MARX") <br> * claim; fig. * | 1,3,4 | TECHNICAL FIELDS SEARCHED (Int.Cl. 3) |
| A | DE - U - 1 658 002 (EISENGIESSEREI UND MASCHINENFABRIK HEMER G. REINHARD & CO) <br> * claim 1; fig. 1, 2 * | 1 | F 16 J  15/00 |
| A | DE - U - 1 854 663 (STEINKOHLENGAS AG) <br> * claim 1; fig. * | 1,3-8 | |
| A | FR - A - 1 311 955 (SOCOMATH) <br> * fig. 1 * | 1,7,8 | CATEGORY OF CITED DOCUMENTS |
| A | CA - A - 962 293 (POLYSAR LTD.) | | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |
| A | FR - A - 911 445 (L. JULIENNE) | | |

The present search report has been drawn up for all claims

&: member of the same patent family, corresponding document

| Place of search | Date of completion of the search | Examiner |
|---|---|---|
| Berlin | 22-02-1982 | MASSALSKI |

EPO Form 1503.1   06.78